Europäisches Patentamt

(19) European Patent Office

Office européen des brevets

(11) Veröffentlichungsnummer: **0 146 116**
**B1**

(12) **EUROPÄISCHE PATENTSCHRIFT**

(45) Veröffentlichungstag der Patentschrifft:
07.02.90

(51) Int. Cl. $^5$: **B 60 D 1/02**

(21) Anmeldenummer: **84115301.8**

(22) Anmeldetag: **12.12.84**

(54) Anhängerkopplung stichwort: Neue Automatik.

(30) Priorität: **15.12.83 DE 3345474**

(43) Veröffentlichungstag der Anmeldung:
.26.06.85 Patentblatt 85/26

(45) Bekanntmachung des Hinweises auf die Patenterteilung:
07.02.90 Patentblatt 90/06

(84) Bennante Vertragsstaaten:
**AT CH DE FR GB IT LI NL SE**

(56) Entgegenhaltungen:
**DE-B-1 074 411**
**DE-B-1 095 132**
**DE-C-807 176**
**DE-C-906 662**
**DE-U-1 892 029**
**DE-U-7 821 632**

(73) Patentinhaber: **ROCKINGER Spezialfabrik für Anhängerkupplungen GmbH & Co.**
**Orleansstrasse 12 Postfach 80 14 44**
**D-8000 München 80 (DE)**

(72) Erfinder: **Breu, Johann**
**Allgäuer Strasse**
**D-8000 München (DE)**

(74) Vertreter: **Weickmann, Heinrich, Dipl.-Ing.**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel**
**Postfach 860820**
**D-8000 München 86 (DE)**

**Beschreibung**

Die Erfindung betrifft eine Anhängerkupplung, umfassend

a) einen Kupplungskörper;

b) einen Kupplungsbolzen, welcher in dem Kupplungskörper verschiebbar geführt ist zwischen einer Kupplungsstellung mit Durchgriff durch eine Zugöse und einer das Aus- und Einfahren der Zugöse aus dem Kupplungskörper bzw. in den Kupplungskörper gestattenden Nicht-Kupplungsstellung;

c) einen um eine Aufwerfhebelschwenkachse schwenkbaren Aufwerfhebel, welcher durch erste Federmittel in Richtung auf eine Sicherungsstellung gespannt ist, in welcher er den Kupplungsbolzen in seiner Kupplungsstellung sichert, und durch eine Betätigungswelle entgegen der Wirkung der ersten Federmittel in eine Haltestellung überführbar ist, in welcher er den Kupplungsbolzen in der Nicht-Kupplungsstellung hält;

d) einen um eine Abstützhebelschwenkachse schwenkbaren Abstützhebel zum Abstützen des Aufwerfhebels in dessen Haltestellung und

e) einen um die Abstützhebelschwenkachse schwenkbaren und quer zu dieser verschiebbaren, der Dreh- und Verschiebewirkung von weiteren Federmitteln unterworfenen Auslösehebel, welcher beim Ausfahren und beim Einfahren der Zugöse unterschiedliche Betriebsstellungsfolgen durchläuft und im Verlauf der durch die einfahrenden Zugöse bewirkten Betriebsstellungsfolge ein Lösemoment auf den Abstützhebel im Sinne der Aufhebung von dessen Abstützfunktion überträgt.

Solche Anhängerkupplungen sind bekannt beispielsweise durch offenkundige Vorbenutzung von Kupplungen des Typs KU-300-06 der Firma Ing. Franz Cramer in Essen (vergl. auch DE-C-906 662). Kennzeichnend für diese Gattung von Kupplungen ist, daß nach erfolgtem Ausfahren der Kupplungsöse aus dem Kupplungskörper kein äußerer Eingriff in die Kupplungsautomatik notwendig ist, um die Kupplungsautomatik in "Kupplungsbereitschaftsstellung" zu bringen, so daß es zum Ankuppeln eines Anhängers lediglich des Einfahrens der Kupplungsöse unter Einwirkung auf den Auslösehebel bedarf.

Bei der bekannten Kupplung sitzt der Aufwerfhebel unverdrehbar auf der mit einem Handbetätigungshebel verbundenen Betätigungswelle. Der Abstützhebel ist einstückig mit dem Auslösehebel hergestellt und gemeinsam mit diesem um die Abstützhebelschwenkachse schwenkbar und auf dieser durch ein Langloch verschiebbar geführt. Zum Überführen des Kupplungsbolzens aus seiner Kupplungsstellung in seine Nicht-Kupplungsstellung wird der Aufwerfhebel mittels der ihn drehfesttragenden Betätigungswelle aus seiner Sicherungsstellung in seine Haltestellung verdreht. Dabei drückt eine an den Aufwerfhebel angeformte Nockenbahn den kombinierten Abstütz-Auslösehebel gegen die Wirkung der weiteren Federmittel unter Verschiebung des Langlochs gegenüber der Abstützhebelschwenkachse zurück, bis der Abstützteil des kombinierten Abstütz-Auslösehebels in eine Kerbe am Ende der Nockenbahn einrasten kann. Damit ist der Aufwerfhebel in seiner Haltestellung abgestützt und kann durch Einwirken auf die Betätigungswelle nicht mehr aus der Haltestellung zurückgestellt werden, sondern nur durch Einwirken auf den Auslösehebel. Beim Ausfahren der Zugöse aus dem Kupplungskörper führen der Aufwerfhebel und der kombinierte Abstütz- und Auslösehebel gegensinnige Drehungen um die Achse der Betätigungswelle und um die Abstützhebelschwenkachse aus, wobei sich der Abstützhebelteil und die Kerbe am Ende der Nockenbahn abwälzen. Beim Einfahren der Zugöse in den Kupplungskörper wird der kombinierte Abstütz- und Auslösehebel um die Abstützhebelschwenkachse verschwenkt, wobei der Abstützhebelteil aus der Kerbe am Ende der Nockenbahn austritt. Das Zusammenwirken der Kerbe am Ende der Nockenbahn des Aufwerfhebels einerseits und des Abstützhebelteils des kombinierten Abstütz- und Auslösehebels ist dabei so, daß bereits nach einer sehr kurzen Ausfahrbewegung der Zugöse aus dem Kupplungskörper heraus der dann verfügbare ebenso kurze Wiedereinfahrweg der Zugöse ausreicht, um die Abstützfunktion aufzuheben, so daß der Aufwerfhebel dann in seine Sicherungsstellung und der Kupplungsbolzen in seine Einkupplungsstellung zurückgehen. Dies hat den Nachteil, daß eine geringfügige, hin- und hergehende Bewegung der Zugöse gegenüber dem Kupplungskörper nach erfolgter Überführung des Kupplungsbolzens in seine Nicht-Kupplungsstellung zu einer Rückkehr des Kupplungsbolzens in seine Kupplungsstellung führen kann mit der Folge, daß der Kupplungsbolzen erneut von der Betätigungswelle her angehoben werden muß und dieses Spiel sich unter ungünstigen Bedingungen mehrmals wiederholen kann. Mit geringfügigem Hin- und Hergehen der Zugöse gegenüber dem Kupplungskörper nach erfolgter Überführung des Kupplungsbolzens in seine Nicht-Kupplungsstellung muß im Hinblick auf Motorvibrationen des Zugfahrzeuges und/oder Nachfederungsbewegungen des Nachlauffahrzeuges immer gerechnet werden. Hinzu kommt, daß selbst Aus- und Einfahrbewegungen, deren Amplitude bei einmaligem Hin- und Hergang nicht ausreicht, um die Abstützfunktion des Abstützhebels aufzuheben, sich addieren, so daß nach mehrmaligem Hin- und Hergang es zur Aufhebung der Abstützfunktion kommt.

Ein weiterer Nachteil der bekannten Kupplung ist, wie schon oben angedeutet, darin zu sehen, daß nach einmal erfolgter Überführung des Aufwerfhebels in seine Haltestellung und des Kupplungsbolzens in seine Nicht-Kupplungsstellung eine Auslösung von Hand im Sinne der Rückkehr des Kupplungsbolzens in die Kupplungsstellung nicht möglich ist, weil die Kerbe am Ende der Nockenbahn des Aufwerfhebels auch bei großer Momenteinwirkung auf die mit dem Aufwerfhebel verbundene Betätigungswelle nicht mehr an der Spitze des Abstützhebelteils des kombinierten Abstütz- und Auslösehebels vorbeigehen kann. Dieses Verhalten führt dazu, daß der Kupplungsbolzen nur durch eine einfahrende Zugöse in seine Kupplungsstellung überführt werden kann. Will man z. B. eine Seilschlaufe in der Kupplung einkuppeln, so muß man zum Überführen des Kupplungsbolzens in seine Kupplungsstellung mit einem Instrument auf den Auslösehebelteil des kombinierten Abstütz- und Auslösehebels einwirken, was mit Verletzungsgefahr verbunden ist. Zu der gleichen gefährlichen Manipulation ist man gezwungen, wenn man beispielsweise zu Beginn einer längeren Betriebsperiode ohne Anhänger den Kupplungsbolzen zum Verschmutzungsschutz der unteren Führung des Kupplungsbolzens im Kupplungskörper in die Kupplungsstellung absenken will, ohne daß ein Anhänger angekuppelt ist.

Der Erfindung liegt die Aufgabe zugrunde, eine Anhängerkupplung gattungsgemäßer Art so auszugestalten, daß in der Nicht-Kupplungsstellung des Kupplungsbolzens dieser auch durch Einwirkung über die Handbetätigungswelle in Kupplungsstellung überführt werden kann und ferner dafür zu sorgen, daß nach Überführung des Kupplungsbolzens in die Nicht-Kupplungsstellung die häufig unvermeidlichen Vibrationen und Relativbewegungen der noch im Kupplungskörper befindlichen Zugöse nicht zu einem unbeabsichtigten Einfallen des Kupplungsbolzens in die Kupplungsstellung führen können.

Zur Lösung dieser Aufgabe werden die folgenden Maßnahmen vorgeschlagen:

f) die Betätigungswelle gegenüber der Aufwerfhebelschwenkachse parallelversetzt ist;
g) der Abstützhebel unverdrehbar und unverschiebbar auf der Betätigungswelle sitzt und in Mitnahmeeingriff mit dem Aufwerfhebel steht, so daß er bei Verschwenkung aus einer Ruhestellung in eine Abstützstellung den Aufwerfhebel aus dessen Sicherungsstellung in dessen Haltestellung mitnimmt;
h) der Auslösehebel drehbar und verschiebbar auf der Betätigungswelle gelagert ist und
i) an dem Abstützhebel und dem Auslösehebel Lösemomentübertragungsanschläge angebracht sind, welche bei ausfahrender Zugöse unter Verschiebung des Auslösehebels in gegenseitige Eingriffsbereitschaftsstellung bringbar sind und bei einfahrender Zugöse eine Schwenklösebewegung von dem Auslösehebel auf den Abstützhebel übertragen.

Dank der unverdrehbaren Anordnung des Abstützhebels auf der Betätigungswelle ist es bei der erfindungsgemäßen Lösung möglich, auch nach einmal erfolgter Überführung des Aufwerfhebels in seine Haltestellung und des Kupplungsbolzens in seine Nicht-Kupplungsstellung die Stützfunktion des Abstützhebels durch Drehen an der Betätigungswelle aufzuheben, da der auf der Betätigungswelle ohne Querverschiebespiel gelagerte Abstützhebel aus der ihn in der Haltestellung des Aufwerfhebels aufnehmenden Raste bei Verdrehung des Abstützhebels durch die Betätigungswelle genauso austreten kann, wie er bei Verdrehung des Abstützhebels über die Lösemomentübertragungsanschläge durch den Auslösehebel ausgerückt wird.

Die Unterteilung des einstückigen Abstütz- und Lösehebels der bekannten Ausführungsform in einen mit der Betätigungswelle drehfest verbundenen Abstützhebel und einen gegenüber der Drehwelle verdrehbaren und quer verschiebbaren Auslösehebel und die Übertragung des Lösemoments von dem Auslösehebel auf den Abstützhebel durch die Lösemomentübertragungsanschläge hat zur Folge, daß bei kleinen Relativbewegungen der noch in dem Kupplungskörper befindlichen Zugöse gegenüber dem Kupplungskörper – da ja die Lösemomentübertragungsanschläge noch nicht in gegenseitige Eingriffsbereitschaftsstellung gelangt sind – eine Einwirkung des Auslösehebels auf den Abstützhebel völlig unterbunden ist, so daß an der Abstützwirkung des Abstützhebels auf den Aufwerfhebel nicht gerüttelt wird. Der Weg, um den die Zugöse aus dem Kupplungskörper herausfahren muß, damit die Lösemomentübertragungsanschläge überhaupt in Eingriffsbereitschaftsstellung gelangen, kann konstruktiv nach Belieben bestimmt werden.

Aus einer offenkundigen Vorbenutzung von Anhänger-Kupplungen Rockinger Typen 401 und 260 (vgl. auch DE-C-807 176 und DE-C-913 265) ist es bekannt, die Betätigungswelle gegenüber der Aufwerfhebelschwenkachse parallelversetzt anzuordnen, den Abstützhebel unverdrehbar und unverschiebbar auf der Betätigungswelle anzubringen und in Mitnahmeeingriff mit dem Aufwerfhebel anzuordnen, so daß der Abstützhebel bei Verschwenkung aus einer Ruhestellung in eine Abstützstellung den Aufwerfhebel aus dessen Sicherungsstellung in dessen Haltestellung mitnimmt. Dabei ist der Auslösehebel drehbar, aber nicht verschiebbar auf der Betätigungswelle gelagert. Wenn der Abstützhebel mit der Betätigungswelle in seine Abstützstellung verschwenkt wird, so gelangt er zuerst in Eingriff mit einer ersten Rast des Aufwerfhebels. Bei Eingriff in diese erste Rast sind der Aufwerfhebel und der Kupplungsbolzen bereits soweit angehoben, daß die Zugöse aus dem Kupplungskörper ausfahren kann. Der Auslösehebel folgt beim Ausfahren der Zugöse aus dem Kupplungskörper unter der Wirkung einer Feder der ausfahrenden Zugöse nach, bis er gegen einen Anschlag des Kupplungskörpers oder eines zugehörigen Fangmauls stößt. Wenn die Zugöse wieder in den Kupplungskörper einfährt, wird der Auslösehebel zurückgedrückt ohne ein Auslösemoment auf den Stützhebel auszuüben, so daß der Kupplungsbolzen durch Einfahren der Zugöse noch nicht in Kupplungsstellung überführt werden kann. Erst nachdem der Abstützhebel durch Weiterbewegen der Betätigungswelle von außen in eine zweite Rast des Aufwerfhebels gebracht worden ist, kommen Lösemomentübertragungsanschläge des Auslösehebels und des Abstützhebels miteinander in Eingriff, so daß anschließend bei Einfahren der Zugöse in den Kupplungskörper deren Einwirkung auf den Auslösehebel zu einem Ausheben des Abstützhebels aus den Rasten führt. Diese bekannte Kupplung hat bereits den Vorteil, daß ein unbeabsichtigtes Einkuppeln bei Relativbewegungen zwischen Zugöse und Kupplungskörper ausgeschlossen ist, unterscheidet sich aber gattungsgemäß von den hierbetrachteten Ausführungsformen dadurch, daß die Einkupplungsbereitschaft erst nach einer nochmaligen Einwirkung von außen auf die Betätigungswelle hergestellt wird.

Durch offenkundige Vorbenutzung einer Anhängerkupplung der Firma Rockinger Typ 248 (vgl. auch DE-C-1 095 132) ist es weiterhin bekannt, zum Überführen des Kupplungsbolzens aus einer Kupplungsstellung in seine Nicht-Kupplungsstellung einen Aufwerfhebel zu verwenden, der auf einer Handbetätigungswelle sitzt. An den zum Zusammenwirken mit einer Eingriffskante des Kupplungsbolzens bestimmten Ende des Aufwerfhebels ist eine Kerbe vorgesehen, die mit der Eingriffskante des Kupplungsbolzens zusammentritt, wenn der Kupplungsbolzen durch Drehen der Betätigungswelle angehoben wird und der Aufwerfhebel seine Haltestellung erreicht, in der er den Kupplungsbolzen in der Nicht-Kupplungsstellung hält. Weiterhin umfaßt die Automatikeinheit einen Auslösehebel, welcher durch eine Feder entgegen der Einfahrrichtung der Zugöse vorgespannt ist. Wenn der Kupplungsbolzen in die Nichtkupplungsstellung übergeführt, die Zugöse aber noch eingefahren ist, liegt der Auslösehebel unter der Wirkung der Feder an dem inneren Ende der Zugöse an. Wenn die Zugöse ausfährt, so folgt ihr der Auslösehebel unter der Wirkung der auf ihn einwirkenden Feder nach, wobei der Auslösehebel dann mit einem Nebenarm in eine Kerbe an dem unteren Ende des Kupplungsbolzens zum Eingriff gelangt und dabei den Kupplungsbolzen anhebt, so daß sich das Ende des Aufwerfhebels aus dem Eingriff mit der Eingriffskante des Kupplungsbolzens lösen kann. Der Kupplungsbolzen wird dann nur noch durch den Nebenarm des Auslösehebels gehalten. Fährt die Zugöse wieder in den Kupplungskörper ein, so wird der Auslösehebel zurückgedrückt und tritt mit seinem Nebenarm aus der Kerbe am unteren Ende des Kupplungsbolzens aus. Der Kupplungsbolzen ist dann zum Übergang in die Kupplungsstellung freigegeben und geht in die Kupplungsstellung über, sobald der Auslösehebel durch die Zugöse soweit ausgelenkt ist, daß ein an dem Auslösehebel angebrachter Abstützhebel außer Eingriff mit einem Anschlag an dem Aufwerfhebel getreten ist und somit auch der Aufwerfhebel dem Kupplungsbolzen in die Kupplungsstellung folgen kann.

Diese bekannte Ausführungsform unterscheidet sich vom Erfindungsgegenstand insofern, als der Aufwerfhebel wieder unverdrehbar auf der Betätigungswelle sitzt. Eine Überführung des Kupplungsbolzens von Hand aus der Nicht-Kupplungsstellung in die Kupplungsstellung ist bei dieser Ausführungsform nur dadurch ermöglicht, daß an dem Auslösehebel ein zusätzliches Handbetätigungsorgan angebracht ist (vgl. auch DE-U-7 821 632). Diese Kupplungsbauart läßt sich praktisch nur dort sinnvoll anwenden, wo mit einem zylindrischen Kupplungsbolzen gearbeitet wird, da nur bei zylindrischer Ausführungsform des Kupplungsbolzens ein Zusammenwirken des Nebenarms des Auslösehebels mit einer Kerbe des Kupplungsbolzens möglich ist. Die Ausführungsform mit zylindrischem Kupplungsbolzen ist daher in der Regel nur bei landwirtschaftlichen Anhängerkupplungen erwünscht und nicht bei LKW-Anhängerkupplungen. Im übrigen unterscheidet sich diese letztere Ausführungsform von der erfindungsgemäßen auch dadurch, daß der Auslösehebel unverschiebbar gelagert ist und mit dem Abstützhebel einstückig zusammengefaßt ist.

Die Steuerung des Auslösehebels bei der erfindungsgemässen Anhängerkupplung kann auf einfache, zuverlässige und robuste Weise dadurch bewerkstelligt werden, daß der Auslösehebel durch die weiteren Federmittel, mindestens ein Paar zusammenwirkender Steueranschläge am Auslösehebel und am Kupplungskörper und durch die ein- und ausfahrende Zugöse derart gesteuert ist, daß

a) bei der Überführung des Abstützhebels aus der Ruhestellung in die Abstützstellung und in seiner Abstützstellung der Auslösehebel durch die Steueranschläge und die Zugöse entgegen der Wirkung der weiteren Federmittel in einer ersten Betriebsstellung gehalten ist, in der der eine ihm zugehörige Lösemomentübertragungsanschlag außer Eingriffsbereitschaft gegenüber dem anderen dem Abstützhebel zugehörigen Lösemomentübertragungsanschlag steht;

b) daß bei Ausfahren der Zugöse der Auslösehebel unter der Wirkung der weiteren Federmittel in eine zweite Betriebsstellung verschwenkt und verschoben wird, in der die Steueranschläge voneinander abgehoben und die Lösemomentübertragungsanschläge in Eingriffsbereitschaftsstellung sind und

c) daß durch die einfahrende Zugöse der Auslösehebel aus der zweiten Betriebsstellung unter Mitnahme des Abstützhebels durch die zusammenwirkenden Lösemomentübertragungsanschläge zunächst so weit verschwenkt wird, bis die Steueranschläge wieder zusammengetreten sind, und danach in Richtung auf die erste Betriebsstellung gleichzeitig verschwenkt und verschoben wird, daß nach Ausrücken des Abstützhebels aus seiner Abstützstellung die Lösemomentübertragungsanschläge wieder außer Eingriffsbereitschaft stehen.

Die Maßnahme nach dem Anspruch 3 bringt weitere Vorteile für das Verhalten der Anhängerkupplung: zum einen sorgt sie dafür, daß auch beim Lösen des Kupplungsbolzens aus seiner Nicht-Kupplungsstellung durch Handeinwirkung auf die Betätigungswelle der Auslösehebel in Richtung auf die zweite Betriebsstellung zurückgeführt wird oder darüber hinaus. Zum anderen bietet die Maßnahme nach dem Anspruch 3 den Vorteil, daß der Auslösehebel von dem Eingriff mit der Zugöse abgehoben werden kann, so daß während der Fahrt das ständige Anschlagen des Auslösehebels an der Zugöse unterbunden ist.

Die Ausbildung nach dem Anspruch 4 unterstützt den einfachen Aufbau insofern, als für zwei verschiedene Federfunktionen eine einzige Feder eingesetzt werden kann.

Die Maßnahme des Anspruchs 5 soll darauf hinweisen, daß die erfindungsgemäße Lösung im Gegensatz zu der zuletzt diskutierten zum Stand der Technik gehörigen Lösung auch dann anwendbar ist, wenn der Kupplungsbolzen eine von der Zylinderform abweichende Form besitzt.

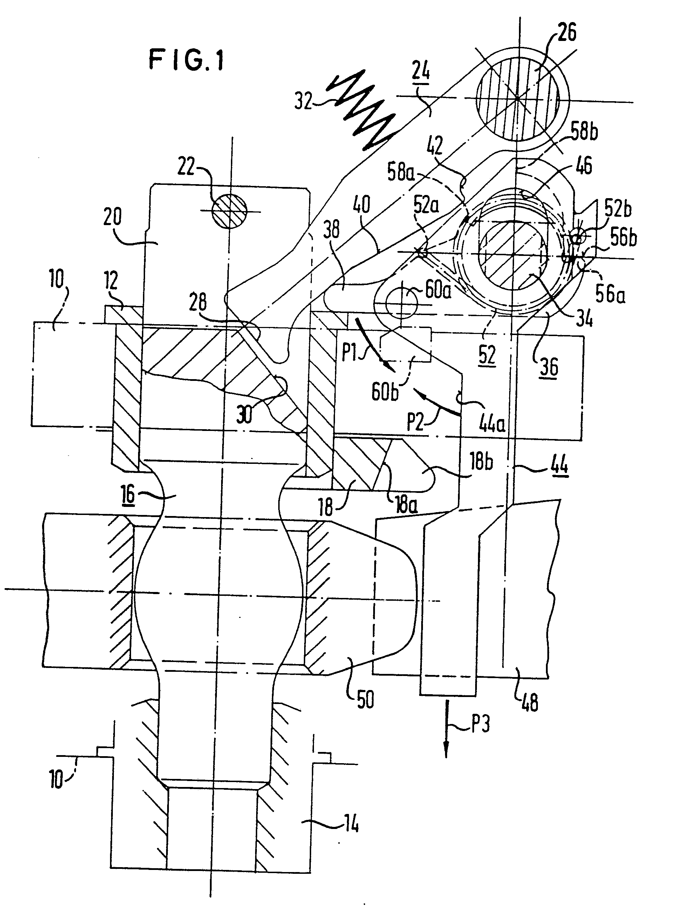

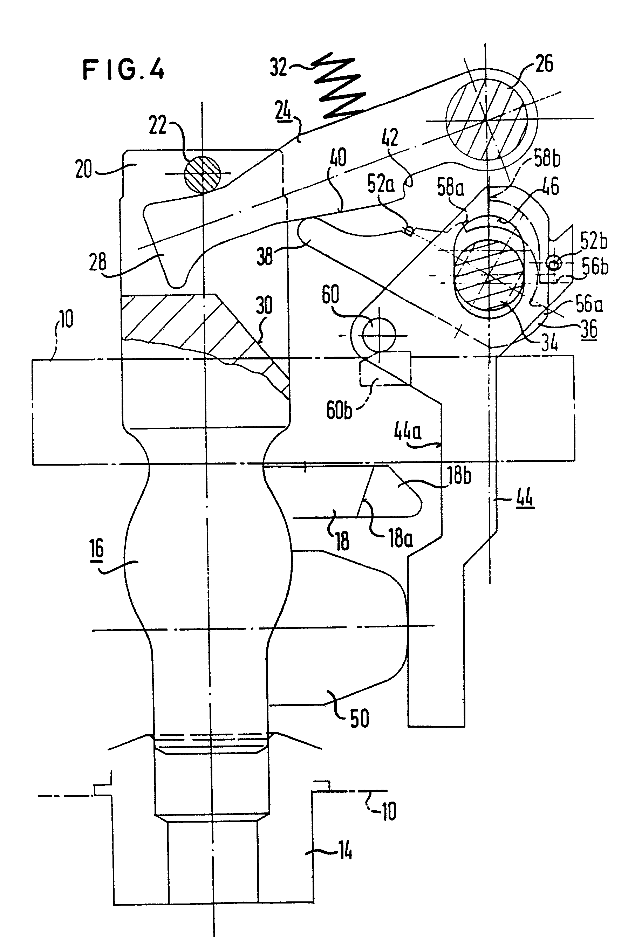

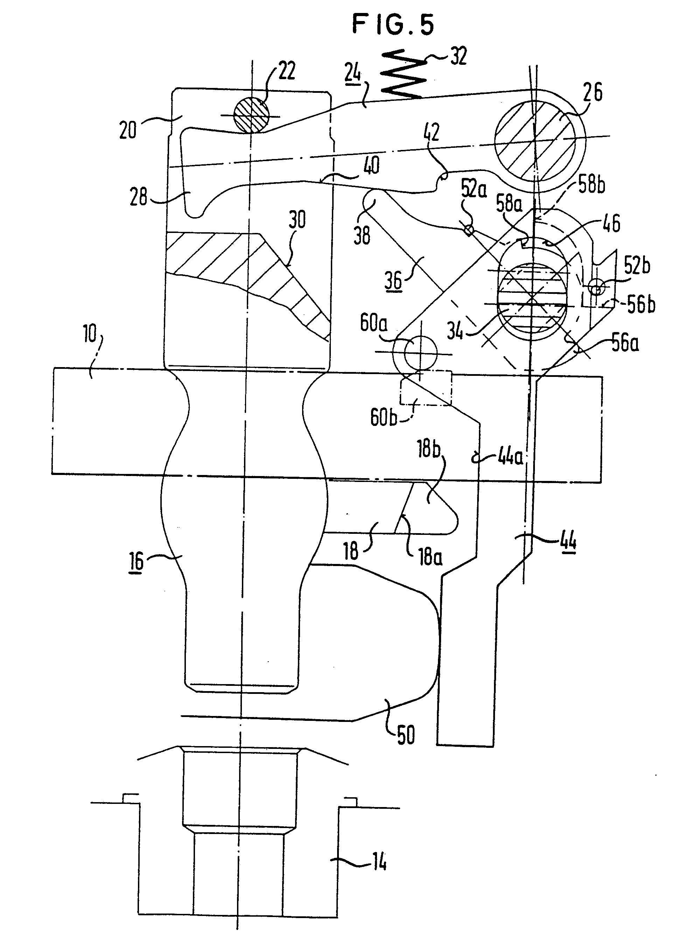

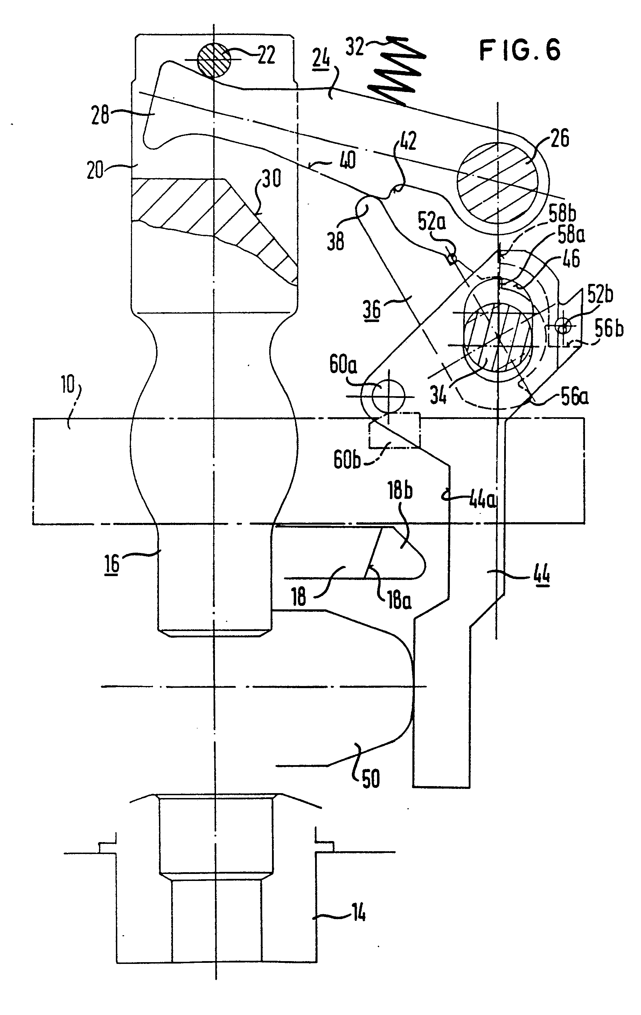

Die beiliegenden Figuren erläutern die Erfindung anhand eines Ausführungsbeispiels, und zwar stellen die Figuren 1 bis 12 verschiedene Betriebszustände der Anhängerkupplung dar.

In Fig. 1 ist der Kupplungskörper mit 10 bezeichnet. Dieser Kupplungskörper 10 weist Führungsbuchsen 12 und 14 für einen Kupplungsbolzen 16 auf. Der Kupplungskörper 10 trägt das Kupplungsmaul, von dem lediglich der obere Lappen 18 eingezeichnet ist. Der Kupplungsbolzen 16 befindet sich in Fig. 1 in der Kupplungsstellung. Am oberen Ende ist der Kupplungsbolzen 16 mit einem Schlitz 20 versehen, der von einem Anhebebolzen 22 überbrückt ist. In den Schlitz 20 greift ein Aufwerfhebel 24 ein, der auf einer im Kupplungskörper angeordneten Aufwerfhebelschwenkachse 26 drehbar gelagert ist. Der Aufwerfhebel 24 steht mit seinem freien Ende 28 einer Abschrägung 30 des Schlitzbodens gegenüber, so daß der Kupplungsbolzen 16 in der gezeichneten Kupplungsstellung durch den Aufwerfhebel 24 gesichert ist. Der Aufwerfhebel 24 ist in seine in Fig. 1 dargestellte Sicherungsstellung durch eine schematisch angedeutete erste Feder 32 vorgespannt.

In dem Kupplungskörper ist ferner eine Betätigungswelle 34 drehbar gelagert. Auf dieser Betätigungswelle 34 sitzt unverdrehbar ein Abstützhebel 36, der eine Mitnahme- und Abstützspitze 38 aufweist. Die Mitnahme- und Abstützspitze 38 liegt an einer Mitnahmekante 40 des Aufwerfhebels 24 an und kann in eine Stützrast 42 des Aufwerfhebels 24 einrasten.

Auf der Betätigungswelle 34 ist ein Auslösehebel 44 mittels eines Langlochs 46 verschiebbar und schwenkbar gelagert. Das untere Ende des Auslösehebels 44 ist zwischen zwei Anschlagbacken 48 für eine Zugöse 50 angeordnet und steht der Zugöse 50 an deren in dem Kupplungskörper einfahrenden Ende gegenüber. Eine um die Betätigungswelle 34 oder eine Nabe des Abstützhebels 36 gewickelte und gegenüber der Betätigungswelle 34 verdrehbare Drehfeder 52 stützt sich mit ihrem einen Ende 52a an dem Abstützhebel 36 ab und greift mit ihrem anderen Ende 52b an dem Auslösehebel 44 an. Diese Drehfeder versucht den Abstützhebel 36 und den Auslösehebel 44 einander im Sinne der Drehpfeile P1, P2 anzunähern. Außerdem versucht sie, den Auslösehebel 44 mit seinem Langloch 46 gegenüber der Betätigungswelle 34 in Richtung des Verschiebepfeils P3 nach unten zu verschieben. In Fig. 1 liegt die Mitnahme- und Abstützspitze 38 des Abstützhebels 36 auf der Buchse 12 auf, und der Aufwerfhebel 24 liegt mit seiner Mitnahmekante 40 auf der Mitnahme- und Abstützspitze 38 auf. Der Auslösehebel 44 ist in der in Fig. 1 gezeichneten Dreh- und Schiebestellung entgegen der Wirkung der Drehfeder 52 dadurch festgehalten, daß ein Mitnahmeanschlag 56a des Abstützhebels 36 an einem Mitnahmeanschlag 56b des Auslösehebels 44 anliegt.

An dem Abstützhebel 36 ist ein Lösemomentübertragungsanschlag 58a angebracht, der mit einem Lösemomentübertragungsanschlag 58b des Auslösehebels 44 zusammenwirken kann.

An dem Abstützhebel 36 ist ferner ein Steueranschlag 60a angebracht, der mit einem Steueranschlag 60b des Kupplungskörpers zusammenwirken kann.

Es ist zu bemerken, daß gemäß Fig. 1 die Steueranschläge 60a und 60b voneinander einen gewissen Abstand haben, so daß das Einfahren der Zugöse 50 über eine vorbestimmte Stellung hinaus, etwa in Folge von Abnutzung der Zugöse 50 oder der Anschlagbacken 48, nicht zu einer zerstörenden Einwirkung auf den Auslösehebel 44 führen sondern dieser in der Fig. 1 nach rechts ausweichen kann.

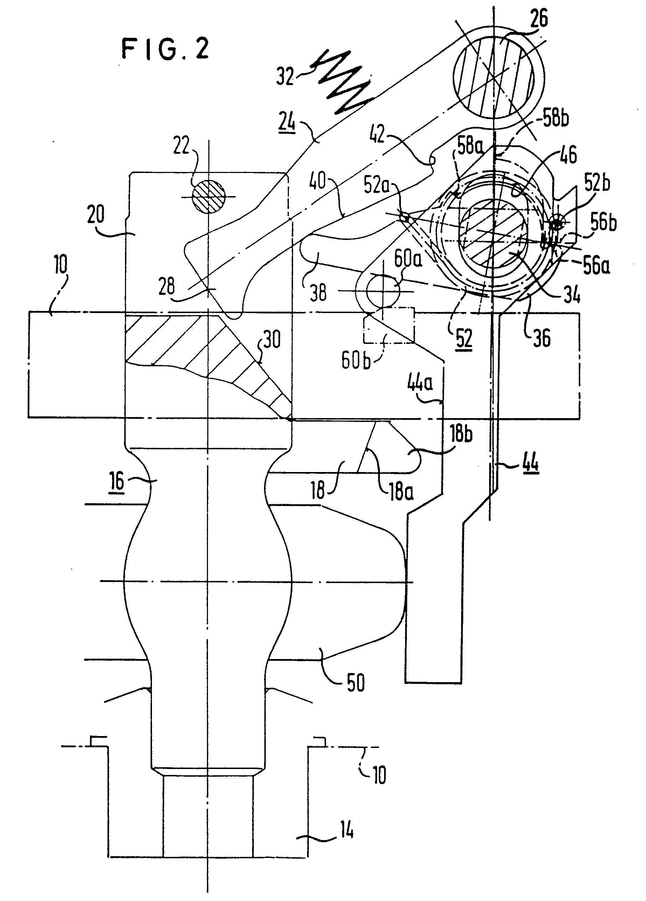

In Fig. 2 ist die Betätigungswelle 34 durch Handeinwirkung gegenüber Fig. 1 im Uhrzeigersinn verdreht worden, so daß die Mitnahme- und Abstützspitze 38 begonnen hat, den Aufwerfhebel 24 ebenfalls im Uhrzeigersinn zu verdrehen. Der Mitnahmeanschlag 56b ist dem Mitnahmeanschlag 56a nach unten gefolgt, so daß sich der Auslösehebel 44 gleichzeitig im Uhrzeigersinn verdreht und nach unten verschoben hat, der Steueranschlag 60a gegen den Steueranschlag 60b und der Auslösehebel 44 gegen die Zugöse 50 angefahren ist. Die damit erreichte Stellung des Auslösehebels 44 wird im Patentanspruch 2 als die erste Betriebsstellung bezeichnet, während die Stellung des Auslösehebels 44 gemäß Fig. 1 im Anspruch 3 als die dritte Betriebsstellung bezeichnet ist.

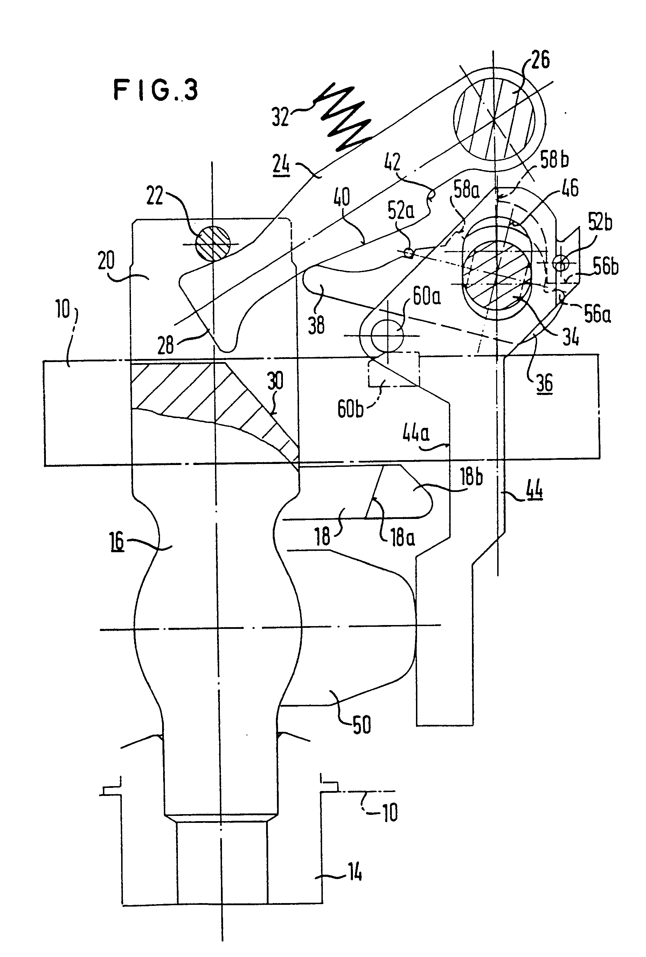

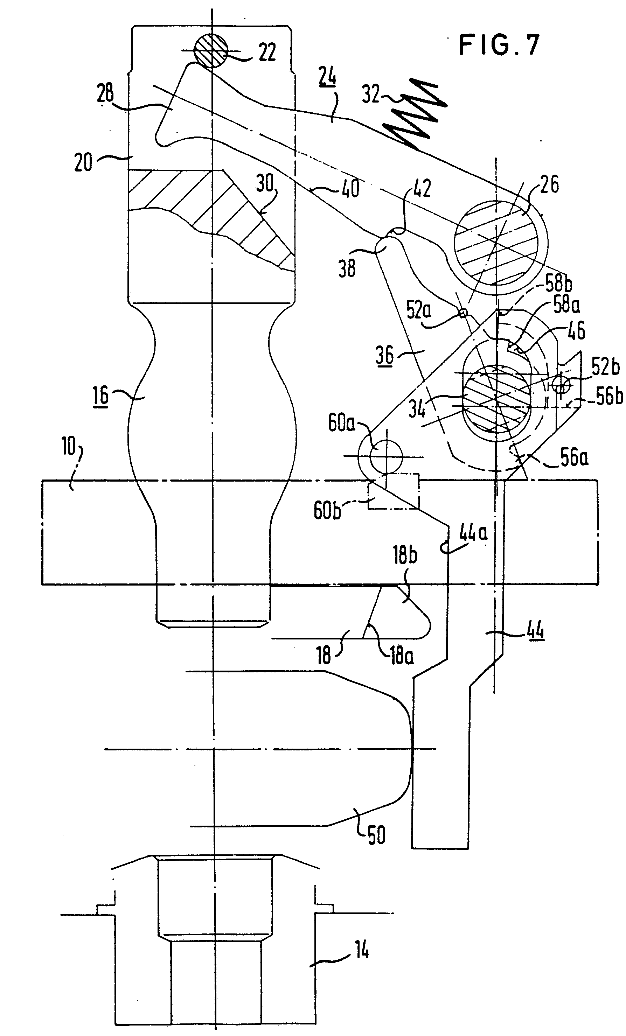

In den Fig. 3 bis 7 ist der Abstützhebel 36 von Figur zu Figur jeweils ein Stück weiter im Uhrzeigersinn verdreht worden; demgemäß wurde auch der Aufwerfhebel 24 weiter im Uhrzeigersinn verdreht, hat sich aus der Sicherungsstellung von der Abschrägung 30 entfernt und über den Anhebebolzen 22 den Kupplungsbolzen 16 aus seiner Kupplungsstellung gemäß Fig. 1 nach oben gehoben, wobei in Fig. 7 die Nicht-Kupplungsstellung des Kupplungsbolzens 16 erreicht worden ist, in der die Zugöse 50 aus- und einfahren kann.

Die Stellung des Auslösehebels (erste Betriebsstellung) ist unverändert geblieben und nach wie vor durch die Anlage des Auslösehebels 44 an der Zugöse 16 und durch die Anlage der Steueranschläge 60a, 60b aneinander bestimmt.

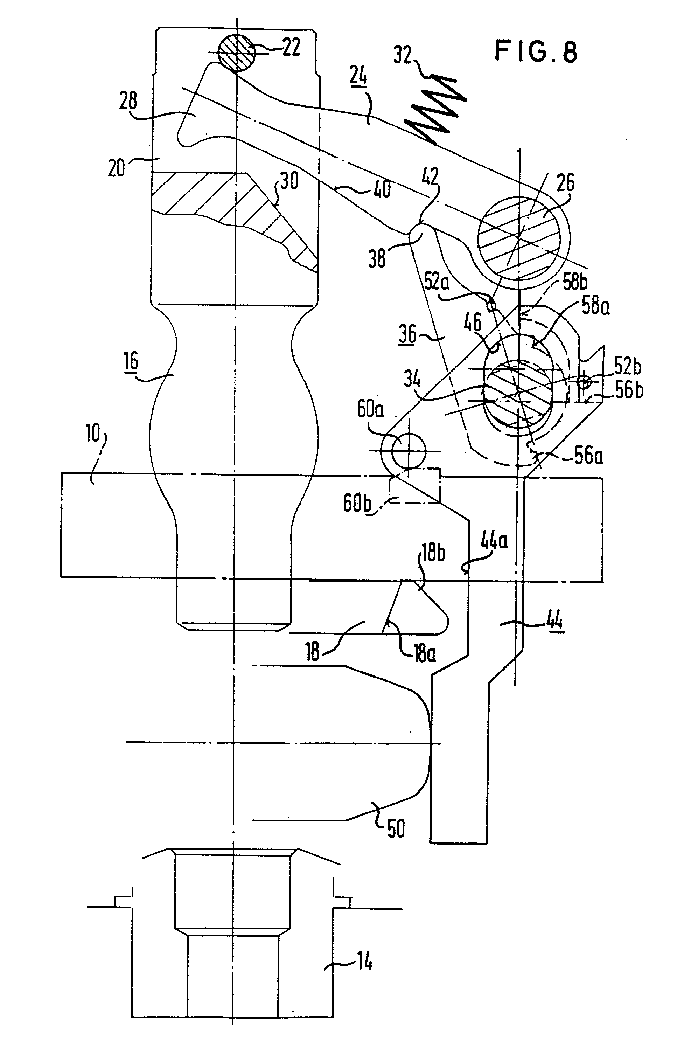

In Fig. 8 ist die Mitnahme- und Abstützspitze 38 des Abstützhebels 34 in die Abstützkerbe 42 des Aufwerfhebels 24 eingetreten. Der Aufwerfhebel 24 verbleibt nunmehr in der in Fig. 8 darge-stellten Haltestellung durch den in der Abstützstellung befindlichen Abstützhebel 36, auch wenn auf die Betätigungswelle 34 kein äußeres Moment mehr einwirkt. Der Auslösehebel 44 nimmt auch in Fig. 8 noch seine erste Betriebs-stellung ein. In Fig. 8 ist derjenige Betriebszustand erreicht, in welchem die Zugöse aus der Kupplung ausfahren kann, etwa durch Vorfahren des Zugfahrzeugs gegenüber dem Anhänger. Dabei braucht während des Entkuppelns von Zugfahrzeug und Anhänger keine Hand an die Kupplung gelegt zu werden.

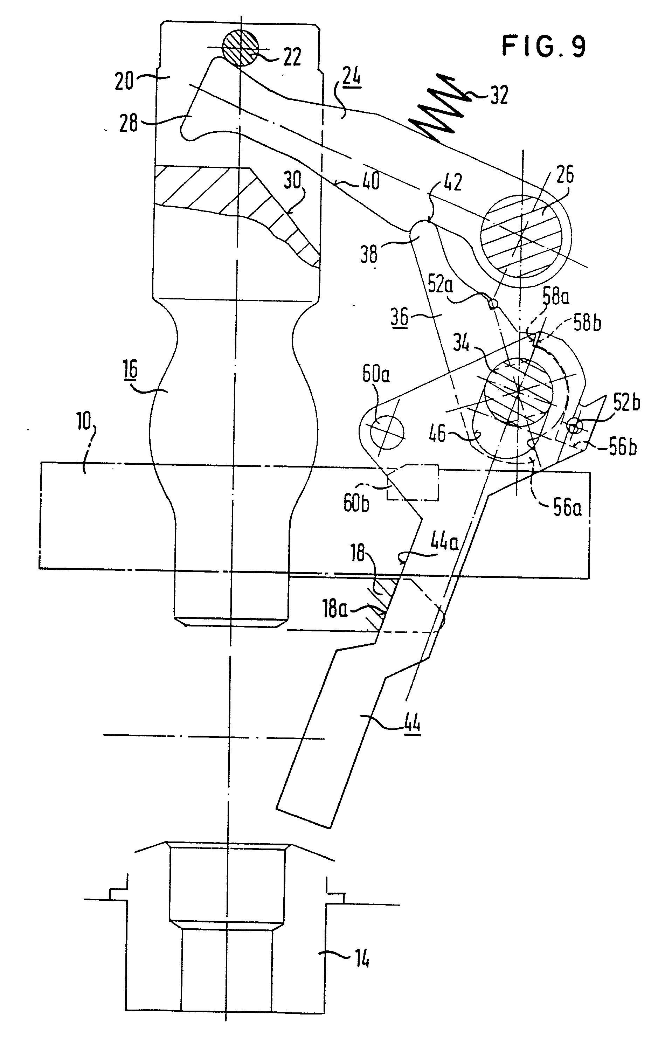

In Fig. 9 ist die Zugöse 50 aus dem Kupplungskörper herausgefahren; der Auslösehebel 44 hat seine Abstützung an der Zugöse verloren und ist unter der Wirkung der Drehfeder 52 in die in Fig. 9 dargestellte Betriebsstellung übergegangen, in der er mit dem oberen Ende des Langlochs 46 an der Betätigungswelle 34 anliegt und mit einer Kante 44a an einer Anschlagfläche 18a des Kupplungsmauls anliegt. Diese Anschlagfläche 18a bildet den Grund eines Schlitzes 18b in dem oberen Lappen 18 des Einführungsmauls so daß das Einführungsmaul nunmehr nach ausgefahrener Zugöse durch den Auslösehebel 44 gegen Verdrehen um die Achse des Kupplungsbolzens 16 gesperrt ist. Der Lösemomentübertragungsanschlag 58b des Auslösehebels 44 befindet sich nunmehr in Eingriffsbereitschaftsstellung gegenüber dem Lösemomentübertragungsanschlag 58a des Abstützhebels 36. Diese Stellung des Auslösehebels 44 ist in Anspruch 2 als dessen zweite Betriebsstellung bezeichnet. Der Aufwerfhebel 24 ist nach wie vor durch den Ab-stützhebel 36 in seiner Haltestellung gestützt, so daß der Kupplungsbolzen 16 nach wie vor in seiner Nicht-Kupplungsstellung steht.

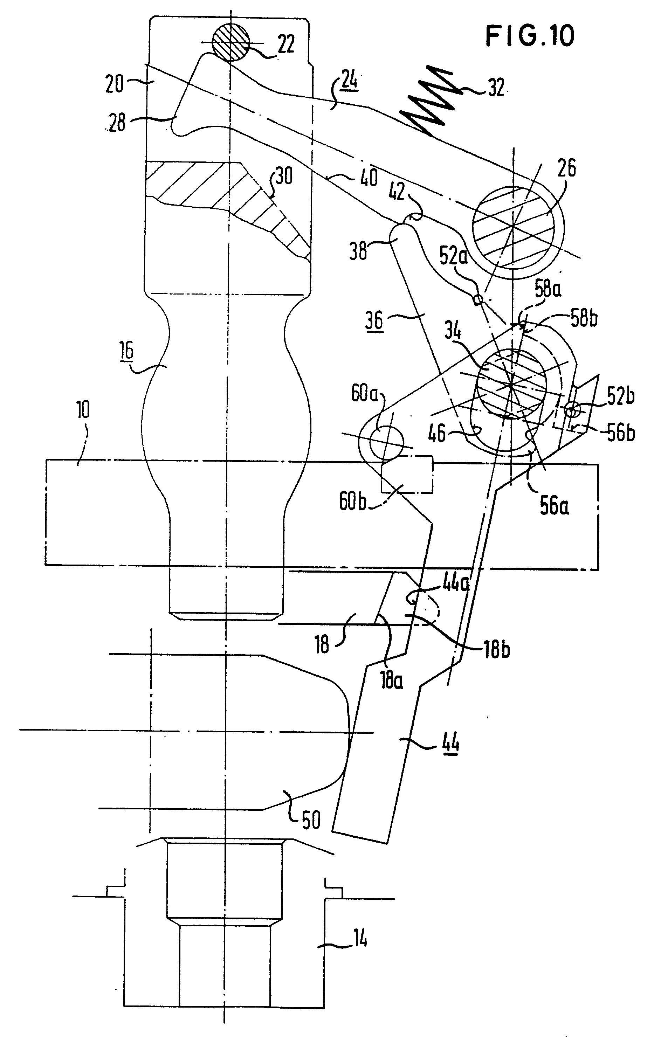

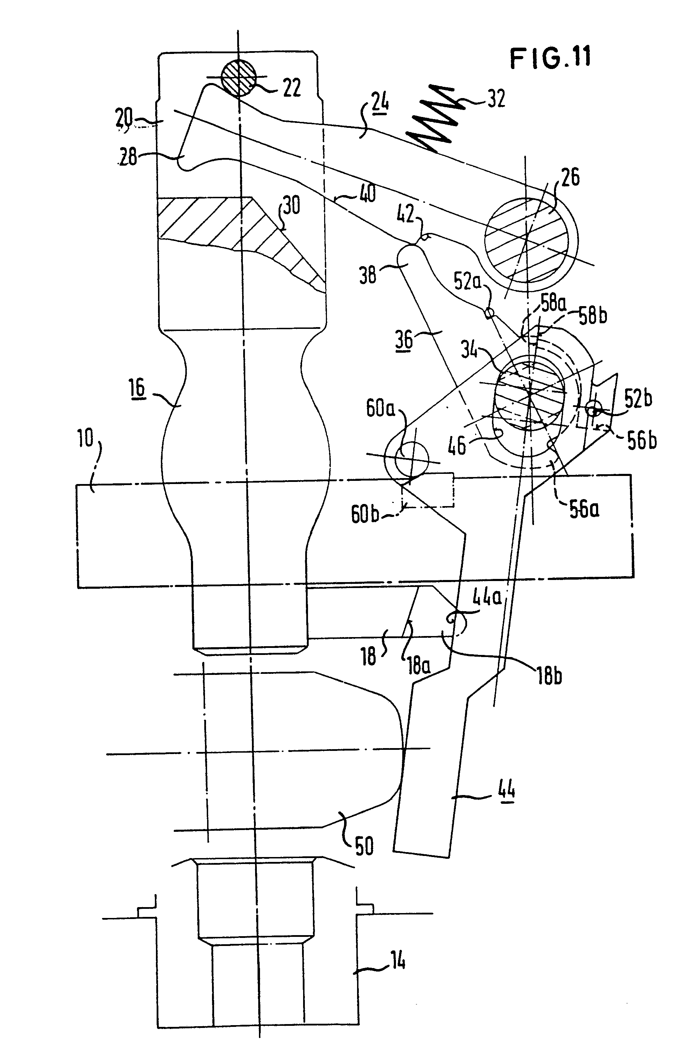

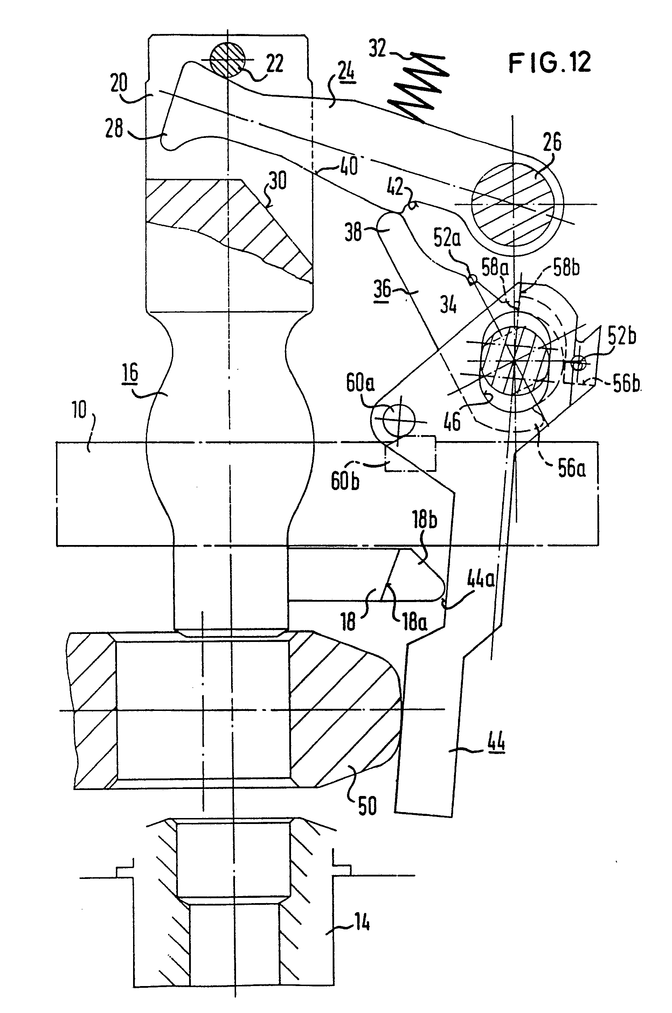

Gemäß Fig. 10 fängt die Zugöse 50 gerade an in den Kupplungskörper einzufahren. Dabei ist der Auslösehebel 44 gegenüber dem Zustand gemäß Fig. 9 bereits soweit um die Betätigungswelle 34 verschwenkt worden, daß der Steueranschlag 60a gegen den Steueranschlag 60b getre-ten ist. Durch die Lösemomentübertragungsan-schläge 58a und 58b ist dabei der Abstützhebel 36 im Gegenzeigersinn soweit verschwenkt worden, daß sich die Mitnahme- und Abstützspitze 38 aus der Abstützkerbe 42 herausbewegt hat. Gemäß Fig. 11 ist durch weiteres Einfahren der Zugöse 50 der Auslösehebel 44 weiter im Gegenzeigersinn um die Betätigungswelle 34 geschwenkt und gleichzeitig mit seinem Langloch 46 gegenüber der Betätigungswelle 34 nach oben verschoben worden, wodurch die Lösemo-mentübertragungsanschläge 58a und 58b begon-nen haben sich voneinander zu lösen. Die Stellung gemäß Fig. 11 ist als eine Momentaufnahme zu betrachten, die nur unendlich kurze Zeit vorhält, da die Mitnahme- und Abstützspitze 38 bereits aus der Abstützkerbe 42 herausgetreten ist und die starke Feder 32 den Aufwerfhebel 24, den Abstützhebel 36 und den Kupplungsbolzen 16 schlagartig nach unten gehen läßt. Eine weitere solche Momentaufnahme ist in Fig. 12 dargestellt, in der sich die Lösemomentübertragungsanschläge 58a und 58b bereits vollständig voneinander gelöst haben, so daß der Lösehebel 44 wieder in die erste Betriebsstellung gemäß den Fig. 2 bis 8 getreten ist.

Beim weiteren Übergang von Fig. 12 zu Fig. 1 trifft der Mitnahmeanschlag 56a auf den Mitnahmeanschlag 56b und führt damit den Auslösehebel 44 in die Betriebsstellung gemäß Fig. 1 zurück, die im Anspruch 3 als die dritte Betriebsstellung des Auslösehebels bezeichnet ist.

Bei der erfindungsgemäßen Lösung ist der Platzbedarf insofern gering, als die Betätigungs-welle 34 unterhalb der Aufwerfhebelschwenkach-se 26 liegt. Dies bedeutet, daß der Weg des freien Endes eines mit der Betätigungswelle 34 verbundenen Handbetätigungshebels dem äußeren Umriß der Kupplung angenähert ist und deshalb der für das freie Ende des Handbetätigungshebels geforderte Freiraum dem äußeren Umriß der Kupplung angenähert ist.

Weiterhin ist zu beachten, daß bei der erfindungsgemäßen Lösung günstige Verhältnisse für die Geringhaltung der am Handbetätigungshebel aufzubringenden Handbetätigungskraft geschaffen sind. Die Handbetätigungskraft ist durch das Zusammenwirken des Abstützhebels 36 mit dem Aufwerfhebel 24 wesentlich geringer gehalten, als wenn der Aufwerfhebel 24 über eine Aufwerfhe-belschwenkwelle direkt mit dem Handbetä-tigungshebel verbunden wäre.

**Patentansprüche**

1. Anhängerkupplung, umfassend

a) einen Kupplungskörper (10);
b) einen Kupplungsbolzen (16), welcher in dem Kupplungskörper (10) verschiebbar geführt ist zwischen einer Kupplungsstellung (Fig. 1) mit Durchgriff durch eine Zugöse (50) und einer das Aus- und Einfahren der Zugöse (50) in den Kupplungskörper (10) bzw. aus dem Kupplungskörper (10) gestattenden Nicht-Kupplungsstellung (Fig. 8);
c) einen um eine Aufwerfhebelschwenkachse (26) schwenkbaren Aufwerfhebel (24), welcher durch erste Federmittel (32) in Richtung auf eine Sicherungsstellung (Fig. 1) gespannt ist, in welcher er den Kupplungsbolzen (16) in seiner Kupplungsstellung (Fig. 1) sichert, und durch eine Betätigungswelle (34) entgegen der Wirkung der ersten Federmittel (32) in eine Haltestellung (Fig. 8) überführbar ist, in welcher er den Kupplungsbolzen (16) in der Nicht-Kupplungsstellung (Fig. 8) hält;

11

d) einen um eine Abstützhebelschwenkachse (34) schwenkbaren Abstützhebel (36) zum Abstützen des Aufwerfhebels (24) in dessen Haltestellung (Fig. 8) und

e) einen um die Abstützhebelschwenkachse (34) schwenkbaren und quer zu dieser verschiebbaren, der Dreh- und Verschiebewirkung von weiteren Federmitteln (52) unterworfenen Auslösehebel (44), welcher beim Ausfahren und beim Einfahren der Zugöse (50) unterschiedliche Betriebsstellungsfolgen durchläuft und im Verlauf der durch die einfahrende Zugöse (50) bewirkten Betriebsstellungsfolge ein Lösemoment auf den Abstützhebel (36) im Sinne der Aufhebung von dessen Abstützfunktion überträgt, dadurch gekennzeichnet, daß

f) die Betätigungswelle (34) gegenüber der Aufwerfhebelschwenkachse (26) parallelversetzt ist;

g) der Abstützhebel (36) unverdrehbar und unverschiebbar auf der Betätigungswelle (34) sitzt und in Mitnahmeeingriff (38, 40) mit dem Aufwerfhebel (24) steht, so daß er bei Verschwenkung aus einer Ruhestellung (Fig. 1) in eine Abstützstellung (Fig. 8) den Aufwerfhebel (24) aus dessen Sicherungsstellung (Fig. 1) in dessen Haltestellung (Fig. 8) mitnimmt;

h) der Auslösehebel (44) drehbar und verschiebbar auf der Betätigungswelle (34) gelagert ist und

i) an dem Abstützhebel (36) und dem Auslösehebel (44) Lösemomentübertragungsanschläge (58a, 58b) angebracht sind, welche bei ausfahrender Zugöse (50) unter Verlagerung des Auslösehebels (44) in gegenseitige Eingriffsbereitschaftsstellung (Fig. 9) übergehen und bei einfahrender Zugöse (50) eine Schwenklösebewegung von dem Auslösehebel (44) auf den Abstützhebel (36) übertragen.

2. Anhängerkupplung nach Anspruch 1, dadurch gekennzeichnet, daß der Auslösehebel (44) durch die weiteren Federmittel (52), mindestens ein Paar zusammenwirkender Steueranschläge (44a, 18a; 60a, 60b) am Auslösehebel (44) und am Kupplungskörper (10) und durch die aus- und einfahrende Zugöse (50) derart gesteuert ist, daß

a) bei der Überführung des Abstützhebels (36) aus der Ruhestellung (Fig. 1) in die Abstützstellung (Fig. 8) und in seiner Abstützstellung (Fig. 8) der Auslösehebel (44) durch die Steueranschläge (60a, 60b) und die Zugöse (50) entgegen der Wirkung der weiteren Federmittel (52) in einer ersten Betriebsstellung (Fig. 2 bis 8) gehalten ist, in der der eine ihm zugehörige Lösemomentübertragungsanschlag (58b) außer Eingriffsbereitschaft gegenüber dem anderen dem Abstützhebel (36) zugehörigen Lösemomentübertragungsanschlag (58a) steht;

b) bei Ausfahren der Zugöse (50) der Auslöse-

12

hebel (44) unter der Wirkung der weiteren Federmittel (52) in eine zweite Betriebsstellung (Fig. 9) verschwenkt und verschoben wird, in der die Steueranschläge (60a, 60b) voneinander abgehoben und die Lösemomentübertragungsanschläge (58a, 58b) in Eingriffsbereitschaftsstellung sind und

c) durch die einfahrende Zugöse (50) der Auslösehebel (44) aus der zweiten Betriebsstellung (Fig. 9) unter Mitnahme des Abstützhebels (36) durch die zusammenwirkenden Lösemomentübertragungsanschläge (58a, 58b) zunächst so weit verschwenkt wird, bis die Steueranschläge (60a, 60b) wieder zusammengetreten sind (Fig. 10) und danach in Richtung auf die erste Betriebsstellung (Fig. 2) gleichzeitig verschwenkt und verschoben wird, so daß nach Ausrücken des Abstützhebels (36) aus seiner Abstützstellung (Fig. 8, 9) die Lösemomentübertragungsanschläge (58a, 58b) wieder außer Eingriffsbereitschaft stehen (Fig. 12).

3. Anhängerkupplung nach Anspruch 2, dadurch gekennzeichnet, daß an dem Auslösehebel (44) und dem Abstützhebel (36) zusammenwirkende Mitnahmeanschläge (56b, 56a) vorgesehen sind, welche beim Übergang des Auslösehebels (44) in die Ruhestellung (Fig. 1) zusammentreten und den Auslösehebel (44) in eine dritte Betriebsstellung (Fig. 1) bringen, in der der Auslösehebel (44) von der Zugöse (50) abgehoben ist.

4. Anhängerkupplung nach einem der Ansprüche 1 bis 3, dadurch gekennzeichnet, daß die weiteren Federmittel (52) von einer Drehfeder gebildet sind, welche den Auslösehebel (44) und den Abstützhebel (36) im Sinne einer Relativverdrehung (P1, P2) gegeneinander vorgespannt und gleichzeitig den Auslösehebel (44) in Verschieberichtung (P3) gegenüber der Betätigungswelle (34) vorspannt.

5. Anhängerkupplung nach einem der Ansprüche 1 bis 4, dadurch gekennzeichnet, daß der Kupplungsbolzen (16) mit einem bombierten Abschnitt in die Zugöse (50) eingreift.

**Claims**

1. Trailer coupling, comprising

a) a coupling body (10);

b) a coupling pin (16) guided for displacement in the coupling body (10) between a coupling position (Fig. 1) in which it passes through a towing lug (50) and a non-coupling position (Fig. 8) which makes it possible to move the towing lug (50) into the coupling member (10) or out of the coupling member (10);

c) an ejector lever (24) pivotable about an ejector lever pivoting axis (26) and which is tensioned by first spring means (32) in the direction of a locking position (Fig. 1) in which it secures the coupling pin (16) in its coupling position (Fig. 1) and can be moved by an actuating shaft (34) and against the action of the first spring means (32) into a retaining position (Fig. 8) in which it maintains the coupling pin (16) in the non-coupled position (Fig. 8);

d) a bracing lever (36) pivotable about a bracing lever pivoting axis (34) for bracing the ejector lever (24) in its retaining position (Fig. 8) and

e) a release lever (44) pivotable about the bracing lever pivot axis (34) and displaceable transversely thereto, being subject to the rotary and displacing effect of further spring means (52) and which, upon disengagement and engagement of the towing lug (50) passes through various sequences of operating position, transmitting during the course of the sequence of operating positions brought about by the engaging towing lug (50), a releasing moment which is applied to the bracing lever (36) in such a way as to overcome its bracing function, characterised in that

f) the actuating shaft (34) is offset parallel with the ejector lever pivot axis (26); .

g) the bracing lever (36) is non-rotatably and non-displaceably mounted on the actuating shaft (34) and is in driving engagement (38, 40) with the ejector lever (24) so that when pivoted out of an inoperative position (Fig. 1) into a bracing position (Fig. 8), it entrains the ejector lever (24) out of its securing position (Fig. 1) into its retaining position (Fig. 8);

h) the release lever (44) is rotatably and displaceably mounted on the actuating shaft (34) and

i) releasing moment transfer abutments (58a, 58b) are disposed on the bracing lever (36) and the release lever (44) and which, upon emerging towing lug (50), with a displacement of the release lever (44), move into a mutual engagement stand-by position (Fig. 9) and upon an engaging towing lug (50) transmit a pivot release movement from the release lever (44) to the bracing lever (36).

2. A trailer coupling according to Claim 1, characterised in that the release lever (44) is so controlled by the further spring means (52), at least one pair of co-operating control abutments (44a, 18a; 60a, 60b) on the release lever (44) and on the coupling member (10) and by the emerging and engaging towing lug (50) that

a) when the bracing lever (36) is moved from the inoperative position (Fig. 1) into the bracing position (Fig. 8) and in its bracing position (Fig. 8) the release lever (44) is held by the control abutments (60a, 60b) and the towing lug (50) in a first operating position (Figs. 2 to 8) against the action of the further spring means (52), in which first operating position its associated release moment transfer abutment (58b) is no longer on engagement stand-by in respect of the other release moment transfer abutment (58a) which is associated with the bracing lever (36);

b) upon emergence of the towing lug (50) the release lever (44) is under the action of the further spring means (52) pivoted and displaced into a second working position (Fig. 9) in which the control abutments (60a, 60b) are lifted off each other, the release moment transfer abutments (58a, 58b) being in the engagement stand-by position and

c) due to the entering towing lug (50) the release lever (44) is initially pivoted sufficiently out of the second working position (Fig. 9), entraining the bracing lever (36), due to the co-operating release moment transfer abutments (58a, 58b) that the control abutments (60a, 60b) have moved back together again (Fig. 10) after which they are pivoted and displaced simultaneously in the direction of the first working position (Fig. 2) so that upon disengagement of the bracing lever (36) from its bracing position (Figs. 8, 9) the release moment transfer abutments (58a, 58b) are again disengaged from their stand-by position (Fig. 12).

3. A trailer coupling according to Claim 2, characterised in that there are on the release lever (44) and on the bracing lever (36) co-operating entraining abutments (56b, 56a) which, when the release lever (44) moves into the inoperative position (Fig. 1) move together and bring the release lever (44) into a third working position (Fig. 1) in which the release lever (44) is lifted off the towing lug (50).

4. A trailer coupling according to one of Claims 1 to 3, characterised in that the further spring means (52) comprise a torsion spring which initially tensions the release lever (44) and the bracing lever (36) in respect of each other in the sense of achieving a relative rotation (P1, P2) while at the same. time initially tensioning the release lever (44) in the direction of displacement (P3) in relation to the operating shaft (34).

5. A trailer coupling according to one of Claims 1 to 4, characterised in that the coupling pin (16) has a convexly curved portion which engages the towing lug (50).

## Revendications

1. Attelage de remorque, comprenant

a) un corps d'attelage (10);

b) une goupille d'attelage (16) qui peut se déplacer dans le corps d'attelage (10) entre une position d'attelage (figure 1), avec traversée d'un anneau de remorquage (50), et une position de non-attelage (figure 8), autorisant l'introduction ou selon le cas la sortie de l'anneau de remorquage (50) dans le ou selon le cas hors du corps d'attelage (10);

c) un levier de soulèvement (24) pivotant autour d'un axe de pivotement de levier de soulèvement (26), levier qui est sollicité par un premier moyen à ressort (32) en direction d'une position de blocage (figure 1) à laquelle il bloque la goupille d'attelage (16) à sa position d'attelage (16), et qui peut être transféré par un arbre d'actionnement (34), à l'encontre de l'action du premier moyen à ressort (32), à une position de maintien (figure 8), à laquelle il maintient la goupille d'attelage (16) à la position de non-attelage (figure 8);

d) un levier de soutien (36) pivotant autour d'un axe de pivotement de levier de soutien (34), pour soutenir le levier de soulèvement (24) à sa position de maintien (figure 8), et

e) un levier de dégagement (44) pivotant autour de l'axe de pivotement du levier de soutien (34) et déplaçable perpendiculairement à ce dernier, soumis à l'action de rotation et de translation d'autres moyens à ressort (52), levier qui passe par des successions différentes de positions de service lors de la sortie et lors de l'introduction de l'anneau de remorquage (50), et qui, au cours de la succession de positions de service engendrée par l'introduction de l'anneau de remorquage (50), transmet sur le levier de soutien (36) un couple de dégagement, au sens de la suppression de sa fonction de soutien, caractérisé en ce que

f) l'arbre d'actionnement (34) est déporté en parallèle par rapport à l'axe de pivotement de levier de soulèvement (26);

g) le levier de soutien (36) est monté sans possibilité de rotation ni de translation relatives sur l'arbre d'actionnement (34), et il se trouve en liaison d'entraînement (38, 40) avec le levier de soulèvement (24), de sorte que, lors du pivotement d'une position de repos (figure 1) à une position de soutien (figure 8), il entraîne avec lui le levier de soulèvement (24) de sa position de blocage (figure 1) à sa position de maintien (figure 8);

h) le levier de dégagement (44) est monté avec possibilité de rotation et de translation sur l'arbre d'actionnement (34), et

i) des butées de transmission de couple de dégagement (58a, 58h) sont montées sur le levier de soutien (36) et le levier de dégagement (44), butées qui, lorsque l'anneau de remorquage (50) est sorti, par déplacement du levier de dégagement (44), se mettent à une position de disponibilité à l'engagement mutuel (figure 9), et qui, lorsque l'anneau de remorquage (50) est rentré, transmettent un mouvement de dégagement de pivotement du levier de dégagement (44) sur le levier de soutien (36).

2. Attelage de remorque selon la revendication 1, caractérisé en ce que le levier de dégagement (44) est commandé, par les autres moyens de ressort (52), par au moins une paire de butées de commande coopérantes (44a, 18a; 60a, 60b) prévues sur le levier de dégagement (44) et sur le corps d'attelage (10), et par l'anneau de remorquage (50) qui entre et sort, commandé de telle sorte que:

a) lors du transfert du levier de soutien (36) de la position de repos (figure 1) à la position de soutien (figure 8), et à la position de soutien (figure 8) du levier de dégagement (44), le levier de dégagement (44) est, par les butées de commande (60a, 60b) et l'anneau de remorquage (50) et à l'encontre de l'action des autres moyens de ressort (52), maintenu à une première position de service (figures 2 à 8), à laquelle une butée de transmission de couple de dégagement (58b) qui lui est associée se trouve hors de disponibilité d'engagement avec l'autre butée de transmission de couple de dégagement (58a), associée au levier de soutien (36);

b) lors de la sortie de l'anneau de remorquage (50), le levier de dégagement (44) est, sous l'action des autres moyens de ressort 52), pivoté et déplacé à une deuxième position de service (figure 9), à laquelle les butées de commande (60a, 60b) sont soulevées à l'écart l'une de l'autre, et les butées de transmission de couple de dégagement (58a, 58b) sont en position de disponibilité d'engagement, et

c) par l'introduction de l'anneau de remorquage (50), le levier de dégagement (44) est, à partir de la deuxième position de service (figure 9), avec entraînement du levier de soutien (36) par la coopération des butées de transmission de couple de dégagement (58a, 58b), tout d'abord pivoté suffisamment pour que les butées de commande (60a, 60b) se rencontrent à nouveau (figure 10), puis simultanément pivoté et déplacé en direction de la première position de service (figure 2), de sorte qu'à la suite du désenclenchement du levier de soutien (36) de sa position de soutien (figures 8, 9), les butées de transmission de couple de dégagement (58a, 58b) se trouvent à nouveau hors de disponibilité à l'engagement mutuel (figure 12).

3. Attelage de remorque selon la revendication 2, caractérisé en ce que des butées d'entraînement coopérantes (56b, 56a) sont prévues sur le levier de dégagement (44) et le levier de soutien (36), butées qui se rencontrent lors du transfert du levier de dégagement (44) à la position de repos (figure 1), et amènent le levier de dégagement (44) à une troisième position de service (figure 1), à laquelle le levier de dégagement (44) est soulevé à l'écart de l'anneau de remorquage (50).

4. Attelage de remorque selon l'une des revendications 1 à 3, caractérisé en ce que les autres moyens à ressort (52) sont constitués par un ressort rotatif, qui précontraint mutuellement le levier de dégagement (44) et le levier de soutien (36) au sens d'une rotation relative (P1, P2), et qui précontraint simultanément le levier de déga-

EP 0 146 116 B1

17

gement (44) dans la direction de translation (P3) par rapport à l'arbre d'actionnement (34).

5. Attelage de remorque selon l'une quelconque des revendications 1 à 4, caractérisé en ce que la goupille d'attelage (16) s'engage par une partie bombée dans l'anneau de remorquage (50).

# FIG.1

EP 0 146 116 B1

FIG. 2

FIG.3

FIG.4

# FIG.5

FIG. 6

EP 0 146 116 B1

FIG.7

13

FIG.8

FIG. 9

FIG.10

# FIG.11

FIG.12